# EUROPÄISCHE PATENTSCHRIFT

(11) **EP 3 122 937 B1**
(45) Veröffentlichungstag und Bekanntmachung des Hinweises auf die Patenterteilung: **02.01.2019**
(21) Anmeldenummer: 15711092.5
(22) Anmeldetag: 10.03.2015
(51) Int. Cl.: D21H 23/76, B32B 29/08, D21H 27/40, D21H 17/28, D21H 17/37, D21H 17/42, D21H 17/44, D21H 17/45, D21H 17/56, D21H 21/18, D21H 19/54, D21H 23/22, B32B 29/06, B32B 3/28, B65D 5/56

(54) **VERFAHREN ZUR HERSTELLUNG VON WELLPAPPENKARTON**
METHOD FOR PRODUCING CORRUGATED CARDBOARD
PROCÉDÉ DE FABRICATION DE CARTON ONDULÉ

(30) Priorität: 28.03.2014 EP 14162385
(43) Veröffentlichungstag der Anmeldung: 01.02.2017
(73) Patentinhaber: BASF SE, 67056 Ludwigshafen am Rhein (DE)
(72) Erfinder: BUCHAN, Matthew, 67117 Limburgerhof (DE); HAFFKE, Reinhard, 26826 Weener (DE); RENSEN, Leonardus Guido Antonius, 6942 KH Didam (NL); HAMERS, Christoph, 67071 Ludwigshafen (DE); SCHALL, Norbert, 67354 Römerberg (DE)
(74) Vertreter: BASF IP Association
(86) Internationale Anmeldenummer: PCT/EP2015/054987
(87) Internationale Veröffentlichungsnummer: WO 2015/144428

(56) Entgegenhaltungen:
- WO-A1-2007/104716
- WO-A1-2010/020551
- DE-A1-102004 056 551

## Beschreibung

Die Erfindung betrifft ein Verfahren zur Herstellung von Wellpappenkarton aus Papierlagen, die jeweils eine Grammatur von 70 bis 200 g/m² aufweisen, von denen mindestens eine Papierlage erhalten wird, durch ein Verfahren umfassend die Zugabe von
(A) 0,25 bis 5 Gew.-%, bezogen auf trockenen Papierstoff, mindestens eines Vinylamineinheiten enthaltenden kationischen Polymers und
(B) 0 bis 5 Gew.-%, bezogen auf trockenen Papierstoff, mindestens einer polymeren anionischen Verbindung,
   zu einem Papierstoff, Entwässern des Papierstoffes unter Blattbildung, Beschichten der erhaltenen Papierbahn mit
(C) 0,1 bis 3 Gew.-%, bezogen auf trockenen Papierstoff, mindestens einer Stärke
   und Trocknen der beschichteten Papierbahn,
   wobei die polymere anionische Verbindung ausgewählt ist unter einer polymeren anionischen Verbindung (B1) und einer polymeren anionischen Verbindung (B2),
   wobei die polymere anionische Verbindung (B1) erhältlich ist durch Copolymerisieren einer Monomermischung, umfassend, vorzugsweise bestehend aus,
   a) mindestens ein Monomer (a) ausgewählt unter Acrylamid und eines N-Vinylcarbonsäureamids der Formel 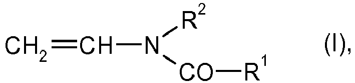 in der R¹, R² = H oder C₁- bis C₆-Alkyl bedeuten,
   b) mindestens ein Säuregruppen enthaltendes monoethylenisch ungesättigtes Monomer und/oder dessen Alkalimetall-, Erdalkalimetall- oder Ammoniumsalzen (b) und
   c) gegebenenfalls ein oder mehrere monoethylenisch ungesättigte Monomere (c), die von den Monomeren (a) und (b) verschieden sind, und
   d) gegebenenfalls eine oder mehrere Verbindungen, die mindestens zwei ethylenisch ungesättigte Doppelbindungen im Molekül aufweisen,
   und die polymere anionische Verbindung (B2) das Hydrolyseprodukt der polymeren anionischen Verbindung (B1) ist, deren Carbonsäureamidreste teilweise oder vollständig zu Aminogruppen hydrolysiert wurden.

Die vorliegende Erfindung betrifft weiterhin den hiernach erhaltenen Wellpappenkarton, sowie dessen Verwendung zur Herstellung von Verpackungsboxen aus Wellpappenkarton.

Es ist allgemein bekannt kationische Stärke als Additive zur Masse, also zum Papierstoff zuzusetzen. Der Ort des Zusatzes zum Papierstoff ist dabei in Stoffstromrichung vor dem Gefäß, welches vom Fachmann als "headbox" der Papiermaschine bezeichnet wird. Wird Stärke bereits der Masse, also dem Faserstoff zugesetzt, so wird sie nachfolgend als Massenstärke bezeichnet.

Weiterhin ist zur Herstellung von Papier mit hoher Trockenfestigkeit es bekannt, auf die Oberfläche von bereits getrocknetem Papier verdünnte wässrige Lösungen von gekochter Stärke oder von synthetischen Polymerisaten aufzutragen, die jeweils als Trockenverfestiger wirken. Wenn Stärke auf die Oberfläche einer Papierbahn aufgetragen wird, bezeichnet sie der Fachmann oft als Oberflächenstärke.

Die JP-A 1999-140787 betrifft ein Verfahren zur Herstellung von Wellpappe, wobei man zur Verbesserung der Festigkeitseigenschaften eines Papierprodukts zum Papierstoff 0,05 bis 0,5 Gew.-%, bezogen auf trockenen Papierstoff, eines Polyvinylamins, das durch Hydrolyse von Polyvinylformamid mit einem Hydrolysegrad von 25 bis 100% zugänglich ist, in Kombination mit einem anionischen Polyacrylamid zugibt, den Papierstoff dann entwässert und trocknet.

Die WO 2006056381 lehrt ein Verfahren zur Herstellung von Papier, Pappe und Karton mit hoher Trockenfestigkeit durch getrennte Zugabe eines kationischen Polyvinylamins und eines anionischen Copolymers zum Papierstoff, wobei das anionische Copolymer durch Polymerisieren eines N-Vinylcarbonsäureamids und eines Säuregruppen enthaltenden monoethylenisch ungesättigten Monomeren erhalten wird.

Zur Herstellung von Wellpappenkarton verwendet man üblicherweise Papier einer Grammatur von 70 bis 200 g/m², zu dessen Papierstoff vor dem Entwässern unter Blattbildung 0,1 bis 4 Gew.-% (bezogen auf trockenen Papierstoff) eines Trockenfestmittels zugesetzt wurden, und das anschließend mit Oberflächenstärke beschichtet wurde. Üblicherweise werden dabei 4 bis 6 Gew.-% Oberflächenstärke eingesetzt. Je nach Grammatur des Papiers ergibt sich die Stabilität des Wellpappenkartons und je nach Stabilitätsanforderungen die hieraus herstellbaren Boxen. Dabei ist man immer daran interessiert, Material und Einsatzstoffe einzusparen, um resourcen-schonender zu arbeiten. Daher war eine Aufgabe der zugrundeliegenden Erfindung, die Menge an Oberflächenstärke zu reduzieren bei gleichbleibender Festigkeit der Wellpappe. Daher lag der vorliegenden Erfindung ein verbessertes Verfahren zur Herstellung von Wellpappenkarton als Aufgabe zugrunde.

Demgemäß wurde das obengenannte Verfahren und der hiernach erhältliche Wellpappenkarton sowie dessen Einsatz zur Herstellung von Verpackungsboxen gefunden. Es wurde gefunden, dass es möglich ist, bei gleicher Verwendung des Wellpappenkartons für Verpackungen einer bestimmten Belastung, erfindungsgemäße Wellpappenkartons mit verminderter Grammatur im Vergleich zu herkömmlichen Wellpappenkartons zu verwenden. Weiterhin wurde gefunden, dass bei gleicher Grammatur des erfindungsgemäßen Wellpappenkartons sowie des herkömmlichen Wellpappenkartons sich die erfindungsgemäßen Wellpappenkarton für Verwendungen mit höherer Belastung eignen.

Unter Papierstoff (auch als Pulpe bezeichnet), wird nachfolgend eine Mischung aus Wasser und Faserstoff verstanden, der je nach Stufe in Herstellungsprozess des Papiers zusätzlich das Vinylamineinheiten enthaltende kationische Polymer, die polymere anionische Verbindung, Füllstoff und gegebenenfalls Papierhilfsmittel enthält. Sofern es sich um einen Bezug auf trockenen Papierstoff handelt, ist der Gesamtpapierstoff aus Faserstoff, Vinylamineinheiten enthaltenden kationischen Polymer, der polymeren anionische Verbindung, Füllstoff und gegebenenfalls Papierhilfsmittel ohne Wasser zu verstehen (Papierstoff fest).

Papiere, die Ausgangspapier zur Herstellung von Wellpappenkarton sind, werden oftmals auch als Testliner, Wellenrohstoff, Wellenrohpapier, Wellpappenrohstoff oder Wellpappenmittellagenpapier bezeichnet.

Das erfindungsgemäße Verfahren dient der Herstellung von Wellpappenkarton umfassend die Verwendung eines in der Regel füllstoffhaltigen Papierstoffes. Der Füllstoffgehalt des erfindungsgemäß eingesetzten Papiers beträgt in der Regel 1-20 Gew.-%, bevorzugt 5 bis 20 Gew.-%, insbesondere 10 - 15 Gew.-% bezogen auf trockenen Papierstoff. Unter Füllstoff ist dabei, wie in der Papierherstellung üblich, anorganisches Pigment zu verstehen.

Erfindungsgemäß können als Faserstoff native und/oder zurückgewonnene Fasern eingesetzt. Verwendung finden können alle in der Papierindustrie üblicherweise eingesetzte Fasern aus Nadel- und Laubhölzern z.B. ungebleichter Zellstoff sowie Faserstoffe aus allen Einjahrespflanzen. Zu Holzstoff gehören beispielsweise Holzschliff, thermomechanischer Stoff (TMP), chemothermomechanischer Stoff (CTMP), Druckschliff, Halbzellstoff, Hochausbeute-Zellstoff und Refiner Mechanical Pulp (RMP). Als Zellstoff kommen beispielsweise Sulfat-, Sulfit- und Natronzellstoffe in Betracht. Geeignete Einjahrespflanzen zur Herstellung von Faserstoffen sind beispielsweise Reis, Weizen, Zuckerrohr und Kenaf.

Bevorzugt wird zur Herstellung der Pulpen Altpapier verwendet, das entweder allein oder in Mischung mit anderen Faserstoffen eingesetzt wird.

Im Falle von Altpapier kann ein Faserstoff mit einem Mahlgrad von 20 bis 50 SR eingesetzt werden. In der Regel wird ein Faserstoff mit einem Mahlgrad von ca. 40 SR eingesetzt, der während der Herstellung der Pulpe gemahlen wird. Bevorzugt wird Faserstoff eingesetzt, der einen Mahlgrad von ≤40 SR aufweist.

Die Vinylamineinheiten enthaltenden kationischen Polymere sind wasserlöslich. Die Löslichkeit in Wasser unter Normalbedingungen (20 °C, 1013 mbar) und pH 7,0 beträgt beispielsweise mindestens 5 Gew.-%, vorzugsweise mindestens 10 Gew.-%.

Die Vinylamineinheiten enthaltenden kationischen Polymere sind aufgrund ihrer Aminogruppe kationisch. Die Ladungsdichte der Vinylamineinheiten enthaltende kationischen Polymere (ohne Gegenion) beträgt mindestens 1,0 meq/g und liegt vorzugsweise im Bereich von 4 bis 10 meq/g.

Die Vinylamineinheiten enthaltenden kationischen Polymere weisen üblicherweise mittlere Molekulargewichte im Bereich von 10 000 bis 10 000 000 Dalton, bevorzugt im Bereich von 20 000 bis 5 000 000 Dalton, besonders bevorzugt im Bereich von 40 000 bis 3 000 000 Dalton auf.

Vinylamineinheiten enthaltende kationische Polymere sind bekannt, vgl. die zum Stand der Technik genannte DE 35 06 832 A1 und DE 10 2004 056 551 A1.
Erfindungsgemäß setzt man als Vinylamineinheiten enthaltendes kationisches Polymer beispielsweise die Reaktionsprodukte ein, die erhältlich sind durch Polymerisieren von
(a) mindestens eines Monomeren der Formel 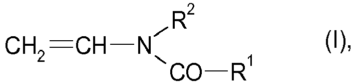 in der R¹, R² = H oder C₁- bis C₆-Alkyl bedeuten,
(c) gegebenenfalls monoethylenisch ungesättigten Monomeren, die von den Monomeren (a) verschieden sind, und
(d) gegebenenfalls Verbindungen, die mindestens zwei ethylenisch ungesättigte Doppelbindungen im Molekül aufweisen
und anschließende teilweise oder vollständige Hydrolyse der in das Polymer einpolymerisierten Einheiten der Monomeren (I) unter Bildung von Aminogruppen
und/oder erhältlich sind
durch Hofmann-Abbau von Polymeren, die Acrylamid- und/oder Methacrylamideinheiten aufweisen.

Die Hydrolyse der Carbonsäureamidreste der einpolymerisierten Einheiten der Monomere (I) überführt die Gruppe -NR²-CO-R¹ in die Gruppe -NR²-H. Beispiele für Monomere der Gruppe (a) sind N-Vinylformamid, N-Vinyl-N-methylformamid, N-Vinylacetamid, N-Vinyl-N-methylacetamid, N-Vinyl-N-ethylacetamid, N-Vinyl-N-methylpropionamid und N-Vinylpropionamid. Die Monomeren der Gruppe (a) können allein oder in Mischung bei der Copolymerisation mit den Monomeren der anderen Gruppen eingesetzt werden.

Die Copolymere können zur Modifizierung gegebenenfalls Monomere der Gruppe (c) in einpolymerisierter Form enthalten z.B. Ester von ethylenisch ungesättigten C₃- bis C₅-Carbonsäuren wie Methylacrylat, Ethylacrylat, n-Butylacrylat, Isobutylacrylat, Isobutylmethacrylat, Methylmethacrylat, Ethylmethacrylat sowie Vinylester z.B. Vinylacetat oder Vinylpropionat, oder andere Monomere wie N-Vinylpyrrolidon, N-Vinylimidazol, Acrylamid und/oder Methacrylamid. Eine weitere Modifizierung der Copolymere ist dadurch möglich, dass man bei der Copolymerisation Monomere (d) einsetzt, die mindestens zwei Doppelbindungen im Molekül enthalten, z.B. Methylenbisacrylamid, Glykoldiacrylat, Glykoldimethacrylat, Glycerintriacrylat, Triallylamin, Pentaerythrittriallylether, mindestens zweifach mit Acrylsäure und/oder Methacrylsäure veresterte Polyalkylenglykole oder Polyole wie Pentaerythrit, Sorbit oder Glukose. Falls mindestens ein Monomer der Gruppe (d) bei der Copolymerisation eingesetzt wird, so betragen die angewendeten Mengen bis zu 2 Mol-%, z.B. 0,001 bis 1 Mol-%.

Als Vinylamineinheiten enthaltendes kationisches Polymer setzt man bevorzugt ein zu mindestens 10 Mol-% hydrolysiertes Homopolymer von N-Vinylformamid ein. Polyvinylamin oder zu mindestens 50 Mol-% hydrolysierte Homopolymere des N-Vinylformamids werden im erfindungsgemäßen Verfahren bevorzugt als Vinylamineinheiten enthaltendes kationisches Polymer eingesetzt.

Gemäß einer weiteren Ausführungsform sind die Reaktionsprodukte bevorzugt, die durch Copolymerisieren von
(1.) N-Vinylformamid und
(2.) Acrylnitril
und anschließender Abspaltung von Formylgruppen aus den in das Copolymer einpolymerisierten Vinylformamideinheiten unter Bildung von Aminogruppen erhältlich sind.

Zur Herstellung der erfindungsgemäß eingesetzten Papiere kann man als Vinylamineinheiten enthaltendes kationisches Polymer auch amphotere Copolymere verwenden, sofern sie mindestens 10 Mol-% mehr kationische als anionische Gruppen aufweisen. Solche amphoteren Polymere sind beispielsweise erhältlich durch Copolymerisation
(a) mindestens eines N-Vinylcarbonsäureamids der Formel 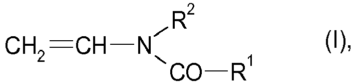 in der R¹, R² = H oder C₁- bis C₆-Alkyl bedeuten,
(b) mindestens eines Säuregruppen enthaltenden monoethylenisch ungesättigten Monomeren und/oder deren Alkalimetall-, Erdalkalimetall- oder Ammoniumsalzen und
(c) gegebenenfalls eines oder mehrerer monoethylenisch ungesättigter Monomere, die von den Monomeren (a) und (b) verschieden sind, und
(d) gegebenenfalls einer oder mehrerer Verbindungen, die mindestens zwei ethylenisch ungesättigte Doppelbindungen im Molekül aufweisen,
und anschließender teilweiser oder vollständiger Hydrolyse der in das Polymer einpolymerisierten Einheiten der Monomeren I unter Bildung von Aminogruppen, wobei der Anteil der Aminogruppen im Copolymer um mindestens 10 Mol-% größer ist als der Anteil der Einheiten an Säuregruppen enthaltenden monoethylenisch ungesättigten Monomeren.

Beispiele für Monomere der Gruppe (a) sind die obengenannten.

Als Monomere der Gruppe (b) kommen insbesondere monoethylenisch ungesättigte Carbonsäuren mit 3 bis 8 C-Atomen sowie die wasserlöslichen Salze dieser Carbonsäuren in Betracht. Zu dieser Gruppe von Monomeren gehören beispielsweise Acrylsäure, Methacrylsäure, Dimethacrylsäure, Ethacrylsäure, Maleinsäure, Fumarsäure, Itaconsäure, Citraconsäure, Methylenmalonsäure, Allylessigsäure, Vinylessigsäure und Crotonsäure. Als Monomere der Gruppe (b) eignen sich außerdem Sulfogruppen enthaltende Monomere wie Vinylsulfonsäure, Acrylamido-2-methyl-propansulfonsäure und Styrolsulfonsäure sowie Vinylphosphonsäure. Die Monomeren dieser Gruppe können allein oder in Mischung miteinander, in teilweise oder in vollständig neutralisierter Form bei der Copolymerisation eingesetzt werden. Zur Neutralisation verwendet man beispielsweise Alkalimetall- oder Erdalkalimetallbasen, Ammoniak, Amine und/oder Alkanolamine. Beispiele hierfür sind Natronlauge, Kalilauge, Soda, Pottasche, Natriumhydrogencarbonat, Magnesiumoxid, Calciumhydroxid, Calciumoxid, Triethanolamin, Ethanolamin, Morpholin, Diethylentriamin oder Tetraethylenpentamin. Die Monomeren der Gruppe (b) werden bei der Copolymerisation vorzugsweise in teilweise neutralisierter Form eingesetzt.

Die Copolymerisate können zur Modifizierung gegebenenfalls Monomere der Gruppe (c) in einpolymerisierter Form enthalten. Beispiele für diese Monomere sind die obengenannten Monomere der Gruppe (c).

Als Verbindungen, die mindestens zwei ethylenisch ungesättigte Doppelbindungen im Molekül aufweisen, sind beispielsweise die obengenannten Monomere (d) geeignet.
Falls mindestens ein Monomer der Gruppe (d) bei der Copolymerisation eingesetzt wird, so beträgt die angewendete Menge bis zu 2 Mol-%, z.B. 0,001 bis 1 Mol-%.

Die Herstellung der oben beschriebenen Vinylamineinheiten enthaltenden kationischen Homo- und Copolymere kann durch Lösungs-, Fällungs-, Suspensions- oder Emulsionspolymerisation erfolgen. Bevorzugt ist die Lösungspolymerisation in wässrigen Medien. Geeignete wässrige Medien sind Wasser und Gemische aus Wasser und mindestens einem wassermischbaren Lösungsmittel, z. B. einem Alkohol, wie Methanol, Ethanol, n-Propanol oder Isopropanol.

Die Copolymerisation der Monomeren erfolgt in bekannter Weise in Gegenwart von radikalischen Polymerisationsinitiatoren und gegebenenfalls in Gegenwart von Polymerisationsreglern, vgl. EP-B 672 212, Seite 4, Zeilen 13 - 37 oder EP-A 438 744, Seite 2, Zeile 26 bis Seite 8, Zeile 18.

Die Hydrolyse der Copolymere kann in Gegenwart von Säuren oder Basen oder auch enzymatisch durchgeführt werden. Bei der Hydrolyse mit Säuren liegen die aus den Vinylcarbonsäureamideinheiten entstehenden Vinylamingruppen in Salzform vor. Die Hydrolyse von Vinylcarbonsäureamidcopolymeren ist in der EP-A 0 438 744, Seite 8, Zeile 20 bis Seite 10, Zeile 3, ausführlich beschrieben. Die dort gemachten Ausführungen gelten entsprechend für die Herstellung der erfindungsgemäß einzusetzenden Vinylamineinheiten enthaltenden rein kationischen und/oder amphoteren Polymeren mit einer kationischen Gesamtladung. Die Vinylamin-einheiten enthaltenden kationischen Polymere können auch in Form der freien Basen eingesetzt werden. Solche Polymere fallen beispielsweise bei der Hydrolyse von Vinylcarbon-säureeinheiten enthaltenden Polymeren mit Basen an.

Die Vinylamineinheiten enthaltenden kationischen Polymeren haben beispielsweise K-Werte (bestimmt nach H. Fikentscher in 5 %iger wässriger Kochsalzlösung bei pH 7, einer Polymerkonzentration von 0,5 Gew.-% und einer Temperatur von 25°C) in dem Bereich von 20 bis 250, vorzugsweise 50 bis 150.

Als Vinylamineinheiten enthaltende kationische Polymere kommen außerdem die Reaktionsprodukte in Betracht, die durch Hofmann-Abbau von Homo- oder Copolymeren des Acrylamids oder Methacrylamids in wässrigem Medium in Gegenwart von Natronlauge und Natriumhypochlorit und anschließende Decarboxylierung der Carbamatgruppen der Umsetzungsprodukte in Gegenwart einer Säure erhältlich sind. Solche Polymere sind beispielsweise aus EP-A 0 377 313 und WO 2006/075115 bekannt. Die Herstellung von Vinylamingruppen enthaltenden Polymeren wird beispielsweise in WO 2006/075115, Seite 4, Zeile 25 bis Seite 10, Zeile 22 sowie in den Beispielen auf den Seiten 13 und 14 ausführlich behandelt. Die dort gemachten Angaben gelten für die Charakterisierung der durch Hofmann-Abbau hergestellten Vinylamineinheiten enthaltenden kationischen Polymeren.

Man geht dabei von Polymeren aus, die Acrylamid- und/oder Methacrylamideinheiten enthalten. Es handelt sich dabei um Homo- bzw. Copolymere von Acrylamid und Methacrylamid. Als Comonomere kommen beispielsweise Dialkylaminoalkyl(meth)acrylamide, Diallylamin, Methyldiallylamin und sowie die Salze der Amine und die quaternierten Amine in Betracht. Außerdem eignen sich als Comonomere Dimethyldiallylammoniumsalze, Acrylamidopropyltrimethylammoniumchlorid und/oder Methacrylamidopropyltrimethylammoniumchlorid, N-Vinylformamid, N-Vinylacetamid, N-Vinylpyrrolidon, Vinylacetat und Acrylsäure- und Methacrylsäureester. Als Comonomere kommen gegebenenfalls auch anionische Monomere wie Acrylsäure, Methacrylsäure, Maleinsäureanhydrid, Maleinsäure, Itaconsäure, Acrylamidomethylpropansulfonsäure, Methallylsulfonsäure und Vinylsulfonsäure sowie die Alkalimetall-, Erdalkalimetall- und Ammoniumsalze der genannten sauren Monomere in Betracht, wobei nicht mehr als 5 Mol-% dieser Monomeren bei der Polymerisation eingesetzt werden. Die Menge an wassserunlöslichen Monomeren wird bei der Polymerisation so gewählt, dass die entstehenden Polymere in Wasser löslich sind.

Als Comonomere können gegebenenfalls auch Vernetzer eingesetzt werden, z. B. ethylenisch ungesättigte Monomere, die mindestens zwei Doppelbindungen im Molekül enthalten, wie Triallylamin, Methylenbisacrylamid, Ethylenglykoldiacrylat, Ethylenglykoldimethacrylat, Polyethylenglykoldimethacrylat, Triallylamin und Trimethyloltrimethacrylat. Falls ein Vernetzer angewendet wird, so betragen die eingesetzten Mengen beispielsweise 5 bis 5000 ppm. Die Polymerisation der Monomeren kann nach allen bekannten Verfahren erfolgen, z. B. durch radikalisch initiierte Lösungs-, Fällungs- oder Suspensionspolymerisation. Man kann dabei gegebenenfalls in Gegenwart üblicher Polymerisationsregler arbeiten.

Beim Hofmann-Abbau geht man beispielsweise von 20 bis 40 gew.-%igen wässrigen Lösungen mindestens eines Acrylamid- und/oder Methacrylamideinheiten enthaltenden Polymeren aus. Das Verhältnis von Alkalimetallhypochlorit zu (Meth)acrylamideinheiten im Polymer ist maßgebend für den entstehenden Gehalt an Amingruppen im Polymer. Das molare Verhältnis von Alkalimetallhydroxid zu Alkalimetallhypochlorit beträgt beispielsweise 2 bis 6, vorzugsweise 2 bis 5. Für einen bestimmten Amingruppengehalt im abgebauten Polymer berechnet man die für den Abbau des Polymeren erforderliche Menge an Alkalimetallhydroxid.

Der Hofmann-Abbau des Polymeren erfolgt z. B. in dem Temperaturbereich von 0 bis 45 °C, vorzugsweise 10 bis 20 °C in Gegenwart von quaternären Ammoniumsalzen als Stabilisator, um eine Nebenreaktion der entstehenden Aminogruppen mit den Amidgruppen des Ausgangspolymeren zu verhindern. Nach Beendigung der Umsetzung mit Alkalilauge/Alkalimetallhypochlorit wird die wässrige Reaktionslösung in einen Reaktor geleitet, in dem eine Säure für die Decarboxylierung des Umsetzungsprodukts vorgelegt ist. Der pH-Wert des Vinylamineinheiten enthaltenden Reaktionsprodukts wird auf einen Wert von 2 bis 7 eingestellt. Die Konzentration des Vinylamineinheiten enthaltenden Abbauprodukts beträgt beispielsweise mehr als 3,5 Gew.-%, meistens liegt sie oberhalb von 4,5 Gew.-%. Die wässrigen Polymerlösungen können beispiels-weise mit Hilfe einer Ultrafiltration aufkonzentriert werden.

Das Vinylamineinheiten enthaltende kationische Polymer (A) wird zur Herstellung des erfindungsgemäß eingesetzten Papier beispielsweise in einer Menge von 0,25 bis 5 Gew.-%, vorzugsweise 0,5 bis 1,5 Gew.-%, besonders bevorzugt 1 bis 1,5 Gew.-%, jeweils bezogen auf trockenen Papierstoff, eingesetzt.

Die polymeren anionischen Verbindungen sind wasserlöslich. Die Löslichkeit in Wasser unter Normalbedingungen (20 °C, 1013 mbar) und pH 7,0 beträgt beispielsweise mindestens 5 Gew.-%, vorzugsweise mindestens 10 Gew.-%.

Die polymeren anionischen Verbindungen tragen Säuregruppen. Die anionische Ladungsdichte der polymeren anionischen Verbindungen (ohne Gegenion) beträgt mindestens -1,0 meq/g und liegt vorzugsweise im Bereich von -4 bis -10 meq/g.

Die mittlere Molmasse Mw der polymeren anionischen Verbindung beträgt beispielsweise 30000 Dalton bis 10 Mio Dalton, vorzugsweise 100 000 Dalton bis 1 Mio Dalton. Diese Polymeren haben beispielsweise K-Werte (bestimmt nach H. Fikentscher in 5%iger wässriger Kochsalzlösung bei pH 7, einer Polymerkonzentration von 0,5 Gew.-% und einer Temperatur von 25°C) in dem Bereich von 20 bis 250, vorzugsweise 50 bis 150.

Die polymere anionische Verbindung ist erhältlich ist durch Copolymerisieren einer Monomermischung, umfassend, vorzugsweise bestehend aus,
(a) mindestens ein Monomer ausgewählt unter Acrylamid und einem N-Vinylcarbonsäureamid der Formel 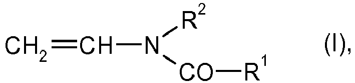 in der R¹, R² = H oder C₁- bis C₆-Alkyl bedeuten,
(b) mindestens ein Säuregruppen enthaltendes monoethylenisch ungesättigtes Monomer und/oder dessen Alkalimetall-, Erdalkalimetall- oder Ammoniumsalze und
(c) gegebenenfalls ein oder mehrere monoethylenisch ungesättigten Monomere, die von den Monomeren (a) und (b) verschieden sind, und
(d) gegebenenfalls eine oder mehrere Verbindungen, die mindestens zwei ethylenisch ungesättigte Doppelbindungen im Molekül aufweisen.

Wenn man die Monomere (a) und (b) oder (a), (b) und (c) in Gegenwart einer Verbindung (d) copolymerisiert, erhält man verzweigte Copolymere. Dabei sind die Mengenverhältnisse und Reaktionsbedingungen so zu wählen, dass noch wasserlösliche Polymere erhalten werden. Unter Umständen kann es dazu notwendig sein, Polymerisationsregler einzusetzen. Verwendung finden können alle bekannten Regler wie Thiole, sec. Alkohole, Sulfite, Phosphite, Hypophosphite, Thiosäuren, Aldehyde usw. (nähere Angaben findet man z.B. in EP-A 438 744, Seite 5, Zeilen 7-12).

Die verzweigten Copolymere enthalten beispielsweise
(a) 10 bis 95 Mol-% Einheiten der Formel I,
(b) 5 bis 90 Mol-% Einheiten eines Säuregruppen enthaltenden monoethylenisch ungesättigten Monomeren und/oder deren Alkalimetall-, Erdalkalimetall- oder Ammoniumsalzen,
(c) 0 bis 30 Mol-% Einheiten mindestens eines monoethylenisch ungesättigten Monomeren, das von den Monomeren (a) und (b) verschieden ist, und
(d) 0 bis 2 Mol-%, vorzugsweise 0,001 bis 1 Mol-% Einheiten mindestens einer Verbindung mit mindestens zwei ethylenisch ungesättigten Doppelbindungen
einpolymerisiert.

Beispiele für Monomere der Gruppe (a) sind die für die Herstellung der kationischen Vinylamineinheiten enthaltenden Polymere genannten Monomere (a).
Weiterhin ist als Monomer (a) Acrylamid geeignet.

Als Monomere der Gruppe (b) kommen vor allem die oben für die Herstellung der Vinylamineinheiten enthaltenden kationischen Polymere eingesetzten Monomere (b) infrage.

Die Copolymere können zur Modifizierung gegebenenfalls Monomere der Gruppe (c) in einpolymerisierter Form enthalten z.B. Ester von ethylenisch ungesättigten C₃- bis C₅-Carbonsäuren wie Methylacrylat, Ethylacrylat, n-Butylacrylat, Isobutylacrylat, Isobutylmethacrylat, Methylmethacrylat, Ethylmethacrylat sowie Vinylester z.B. Vinylacetat oder Vinylpropionat, oder andere Monomere wie N-Vinylpyrrolidon, N-Vinylimidazol.

Als Monomere der Gruppe (d) sind die oben für die Vinylamineinheiten enthaltenden kationischen Polymere eingesetzten Monomere (d) geeignet.

Die Polymerisation der Monomeren erfolgt in bekannter Weise in Gegenwart von radikalischen Polymerisationsinitiatoren und gegebenenfalls in Gegenwart von Polymerisationsreglern, vgl. EP-B 672 212, Seite 4, Zeilen 13 - 37 oder EP-A 438 744, Seite 2, Zeile 26 bis Seite 8, Zeile 18.

Vorzugsweise setzt man als polymere anionische Verbindung ein anionisches Copolymer ein, das erhältlich ist durch Copolymerisieren von
(a1) N-Vinylformamid,
(b1) mindestens eines Momomers ausgewählt unter Acrylsäure, Methacrylsäure und den Alkali- oder Ammoniumsalzen der Acryl- oder Methacrylsäure und
(c1) gegebenenfalls ein oder mehrere monoethylenisch ungesättigte Monomere, die von den Monomeren der Gruppen (a) und (b) verschieden sind.

Die polymere anionische Verbindung enthält beispielsweise
(a) 10 bis 95 Mol-% Einheiten der Formel I
(b) 5 bis 90 Mol-% Einheiten einer monoethylenisch ungesättigten Carbonsäure mit 3 bis 8 C-Atomen im Molekül und/oder deren Alkalimetall-, Erdalkalimetall- oder Ammoniumsalze und
(c) 0 bis 30 Mol-% Einheiten mindestens eines monoethylenisch ungesättigten Monomeren, das von den Monomeren der Gruppen (a) und (b) verschieden ist.

Als polymere anionische Verbindung setzt man vorzugsweise ein anionisches Copolymer ein, das erhältlich ist durch Copolymerisieren von
(a2) 50 bis 90 Mol-% N-Vinylformamid,
(b2) 10 bis 50 Mol-% mindestens eines Monomers ausgewählt unter Acrylsäure, Methacrylsäure und den Alkali- oder Ammoniumsalzen der Acryl oder Methacrylsäure und
(c2) 0 bis 30 Mol-% mindestens eines monoethylenisch ungesättigten Monomeren, das von den Monomeren der Gruppen (a) und (b) verschieden ist.

Besonders bevorzugt setzt man als polymere anionische Verbindung anionische Copolymere von Acrylamid ein.

Bevorzugt werden als polymere anionische Verbindung Copolymere, die erhältlich sind durch Copolymerisieren einer Monomermischung umfassend, vorzugsweise bestehend aus,
(a1) Acrylamid
(b1) Acrylsäure, Methacrylsäure und/oder Alkali- oder Ammoniumsalzen der Acryl- oder Methacrylsäure und
(c1) gegebenenfalls ein oder mehreren monoethylenisch ungesättigten Monomeren, die von den Monomeren der Gruppen (a) und (b) verschieden sind.

Die polymere anionische Verbindung enthält beispielsweise
(a) 10 bis 95 Mol-% Einheiten Acrylamid
(b) 5 bis 90 Mol-% Einheiten einer monoethylenisch ungesättigten Carbonsäure mit 3 bis 8 C-Atomen im Molekül und/oder deren Alkalimetall-, Erdalkalimetall- oder Ammoniumsalze und
(c) 0 bis 30 Mol-% Einheiten mindestens eines monoethylenisch ungesättigten Monomeren, das von den Monomeren der Gruppen (a) und (b) verschieden ist.

Besonders bevorzugt setzt man als polymere anionische Verbindung anionische Copolymere von Acrylamid mit einer Verbindung ausgewählt unter Acrylsäure, Methacrylsäure und den Alkali- oder Ammoniumsalzen der Acryl- oder Methacrylsäure, bevorzugt von Acrylamid mit Acrylsäure, ein.

Diese anionischen Copolymere enthalten im Allgemeinen mindestens 30 Gew.-%, in bevorzugter Form mindestens 40 Gew.-%, und in besonders bevorzugter Form mindestens 50 Gew.-% sowie im Allgemeinen höchstens 90 Gew.-%, vorzugsweise höchstens 85 Gew.-%, und in besonders bevorzugter Form höchstens 80 Gew.-% Acrylamid einpolymerisiert, bezogen auf das Gesamtgewicht der Monomere.

Diese anionischen Copolymere enthalten im Allgemeinen mindestens 70 Gew.-%, in bevorzugter Form mindestens 60 Gew.-%, und in besonders bevorzugter Form mindestens 40 Gew.-% sowie im Allgemeinen höchstens 10 Gew.-%, vorzugsweise höchstens 15 Gew.-%, und in besonders bevorzugter Form höchstens 20 Gew.-% einer Verbindung ausgewählt unter Acrylsäure, Methacrylsäure und deren Alkali- oder Ammoniumsalzen, bevorzugt Acrylsäure, einpolymerisiert, bezogen auf das Gesamtgewicht der Monomere.

Besonders bevorzugt werden als polymere anionische Verbindung Acrylamid /Acrylsäurecopolymere mit einem Mol-Verhältnis Acrylamid/Acrylsäure von 70/30.

Als polymere anionische Verbindung kommen auch amphotere Copolymere mit anionischer Gesamtladung in Betracht, die erhältlich sind durch Copolymerisieren von
(a) mindestens eines Monomer ausgewählt unter Acrylamid und eines N-Vinylcarbonsäureamids der Formel 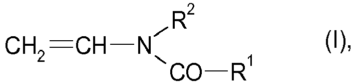 in der R¹, R² = H oder C₁- bis C₆-Alkyl bedeuten,
(b) mindestens einer monoethylenisch ungesättigten Carbonsäure mit 3 bis 8 C-Atomen im Molekül und/oder deren Alkalimetall-, Erdalkalimetall- oder Ammoniumsalzen und gegebenenfalls
(c) anderen monoethylenisch ungesättigten Monomeren, die von den Monomeren (a) und (b) verschieden sind, und gegebenenfalls
(d) Verbindungen, die mindestens zwei ethylenisch ungesättigte Doppelbindungen im Molekül aufweisen,
und anschließende teilweise Abspaltung von Gruppen -CO-R¹ aus den in das Copolymer einpolymerisierten Monomeren der Formel I unter Bildung von Aminogruppen, wobei der Gehalt an Aminogruppen im Copolymer mindestens 5 Mol-% unter dem Gehalt an einpolymerisierten Säuregruppen der Monomere (b) beträgt. Bei der Hydrolyse von N-Vinylcarbonsäureamidpolymeren entstehen in einer sekundären Reaktion Amidineinheiten, indem Vinylamineinheiten mit einer benachbarten Vinylformamideinheit reagieren. Im Folgenden bedeutet die Angabe von Vinylamineinheiten in den amphoteren Copolymeren immer die Summe aus Vinylamin- und Amidineinheiten.

Die so erhältlichen amphoteren Verbindungen enthalten beispielsweise
(a) 10 bis 95 Mol-% Einheiten der Formel I
(b) 5 bis 90 Mol-% Einheiten eines Säuregruppen enthaltenden monoethylenisch ungesättigten Monomeren und/oder deren Alkalimetall-, Erdalkalimetall- oder Ammoniumsalzen,
(c) 0 bis 30 Mol-% Einheiten mindestens eines monoethylenisch ungesättigten Monomeren, das von den Monomeren (a) und (b) verschieden ist,
(d) 0 bis 2 Mol-% Einheiten einer mindestens zwei ethylenisch ungesättigte Doppelbindungen enthaltenden Verbindung, und
(e) 0 bis 42 Mol-% Vinylamineinheiten einpolymerisiert enthält, wobei der Gehalt an Aminogruppen im Copolymer mindestens 5 Mol-% unter dem Gehalt an einpolymerisierten Säuregruppen enthaltenden Monomeren (b) beträgt.

Die Hydrolyse der anionischen Copolymere kann in Gegenwart von Säuren oder Basen oder auch enzymatisch durchgeführt werden. Bei der Hydrolyse mit Säuren liegen die aus den Vinylcarbonsäureamideinheiten entstehenden Vinylamingruppen in Salzform vor. Die Hydrolyse von Vinylcarbonsäureamidcopolymeren ist in der EP-A 438 744, Seite 8, Zeile 20 bis Seite 10, Zeile 3, ausführlich beschrieben. Die dort gemachten Ausführungen gelten entsprechend für die Herstellung der erfindungsgemäß einzusetzenden amphoteren Polymere.

Die polymere anionische Verbindung wird im erfindungsgemäßen Verfahren in einer Menge von beispielsweise 0,01 bis 2,0 Gew.-%, vorzugsweise 0,05 bis 1,0 Gew.-%, insbesondere 0,1 bis 0,5 Gew.-%, bezogen auf trockenen Papierstoff, eingesetzt. Das Gew.-Verhältnis des Vinylamineinheiten enthaltenden kationischen Polymers zu der polymeren anionischen Verbindung beträgt im bevorzugten Fall des Einsatzes der polymeren anionischen Verbindung beispielsweise 3 : 1 bis 1 : 3 und liegt vorzugsweise bei 1 : 1.

Im erfindungsgemäßen Verfahren wird vorzugsweise zunächst das Vinylamineinheiten enthaltende kationische Polymer zum Papierstoff dosiert. Die Zugabe des Vinylamineinheiten enthaltenden kationischen Polymers kann dabei zum Dickstoff (Faserkonzentration >15 g/l, z.B. in dem Bereich von 25 bis 40 g/l bis zu 60 g/l) oder vorzugsweise zu einem Dünnstoff (Faserkonzentration <15 g/l, z.B. in dem Bereich von 5 bis 12 g/l) erfolgen. Die Zugabestelle liegt vorzugsweise vor den Sieben, sie kann jedoch auch zwischen einer Scherstufe und einem Screen oder danach liegen.

Die polymere anionische Verbindung wird meistens erst nach der Zugabe des Vinylamineinheiten enthaltenden kationischen Polymers zum Papierstoff zugegeben, kann aber auch gleichzeitig, jedoch getrennt von dem Vinylamineinheiten enthaltenden kationischen Polymer zum Papierstoff dosiert werden. Weiterhin ist es auch möglich zuerst die anionische und nachfolgend die kationische Komponente zuzugeben.

Die Einwirkzeit des Vinylamineinheiten enthaltenden kationischen Polymers bzw. der polymeren anionischen Verbindung auf einen reinen Faserstoff bzw. Papierstoff nach der Dosierung bis zur Blattbildung beträgt beispielsweise 0,5 Sekunden bis 2 Stunden, bevorzugt 1,0 Sekunden bis 15 Minuten, besonders bevorzugt 2 bis 20 Sekunden.

Zusätzlich zu dem Vinylamineinheiten enthaltenden kationischen Polymer und der polymeren anionischen Verbindung können dem Papierstoff, in der Regel bei einer Faserstoffkonzentration von 5 bis 15 g/l gegebenenfalls übliche Papierhilfsmittel beigemischt werden. Konventionelle Papierhilfsmittel sind beispielsweise Leimungsmittel, Nassfestmittel, kationische oder anionische Retentionsmittel auf Basis synthetischer Polymere sowie duale Systeme, Entwässerungsmittel, optische Aufheller, Entschäumer, Biozide und Papierfarbstoffe. Diese konventionellen Papieradditive können in den üblichen Mengen eingesetzt werden.

Als Leimungsmittel sind Alkylketendimere (AKD), Alkenylbernsteinsäureanhydride (ASA) und Harzleim zu nennen.

Als Retentionsmittel kommen beispielsweise anionische Mikropartikel (kolloidale Kieselsäure, Bentonit), anionische Polyacrylamide, kationische Polyacrylamide, kationische Stärke, kationisches Polyethylenimin oder kationisches Polyvinylamin in Frage. Darüber hinaus sind beliebige Kombinationen davon denkbar, beispielsweise duale Systeme, die aus einem kationischen Polymer mit einem anionischen Mikropartikel oder einem anionischen Polymer mit einem kationischen Mikropartikel bestehen. Um eine hohe Füllstoffretention zu erreichen, empfiehlt sich die Zugabe von derartigen Retentionsmitteln, die beispielsweise zum Dickstoff aber auch zu dem Dünnstoff zugegeben werden können.

Erfindungsgemäß wird die nach Behandeln des Papierstoffes und Entwässern erhaltenen Papierbahn mit 0,1 bis 3 Gew.-%, bezogen auf trockenen Papierstoff mit mindestens einer Stärke behandelt.

Als Stärketypen kommen native Stärken wie Kartoffel-, Weizen-, Mais-, Reis- oder Tapiokastärke in Betracht, wobei Kartoffelstärke bevorzugt ist. Ebenso können chemisch modifizierte Stärken wie Hydroxyethyl- oder Hydroxypropylstärken eingesetzt werden oder auch Stärken, die anionische Gruppen enthalten wie Phosphatstärke, oder auch kationisierte Stärken, die quaternäre Ammoniumgruppen enthalten, wobei ein Substitutionsgrad DS = 0,01 bis 0,2 bevorzugt ist. Der Substitutionsgrad DS gibt dabei die Zahl der kationischen Gruppen an, die durchschnittlich pro Glucoseeinheit in der Stärke enthalten sind. Besonders bevorzugt sind amphotere Stärken, die sowohl quaternäre Ammoniumgruppen als auch anionische Gruppen wie Carboxylat und/oder Phosphatgruppen enthalten und die gegebenenfalls auch chemisch modifiziert sein können, z. B. hydroxylalkyliert oder alkylverestert. Die Stärken können einzeln aber auch in beliebigen Mischungen untereinander eingesetzt werden.

Bevorzugt wird eine aufgeschlossene (abgebaute) Stärke eingesetzt. Bei vollständig aufgeschlossener Stärke sind die Stärkekörner vollständig aufgeplatzt, wobei die Stärke in molekulardisperser Form vorliegt. Die mittleren Molmassen M_{w} einer abgebauten Stärke liegen beispielsweise im Bereich von 0,6 Mio bis 8 Mio Dalton, bevorzugt im Bereich von 1 bis 5 Mio Dalton besonders bevorzugt im Bereich von 1,5 bis 4 Mio Dalton.

Der Abbau kann dabei thermisch erfolgen, was üblicherweise unter gekochter Stärke verstanden wird. Weiterhin kann der Abbau enzymatisch erfolgen. Schließlich kann der Abbau auch oxidativ erfolgen. Besonders bevorzugt wird eine enzymatisch abgebaute Stärke eingesetzt.

Die Beschichtung erfolgt in einer Film und/oder Leimpresse oder nach einem kontaktfreien Auftragsverfahren mit einem Sprühbalken oder Vorhangstreichverfahren.
Die Beschichtung kann mittels einer Rakel oder einer Düse erfolgen. Das Papierblatt hat zum Zeitpunkt des Auftrags bevorzugt einen Wassergehalt von ≤ 60 Gew.-%.

Aus den erfindungsgemäß erhaltenen Papierbahnen wird nach üblichen Verfahren ein Wellpappenkarton hergestellt. Dabei kann sowohl die gewellte Mittelpapierlage wie auch eine oder beide Deckpapierlagen eine erfindungsgemäß hergestellte Papierbahn sein. Vorzugsweise sind alle drei Papierlagen nach dem erfindungsgemäßen Verfahren hergestellt.

Der erfindungsgemäß hergestellte Wellpappenkarton ist ebenfalls Gegenstand der vorliegenden Erfindung. Der erfindungsgemäße Wellpappenkarton eignet sich hervorragend zur Herstellung von Verpackungsboxen. Die Herstellung der Verpackungsboxen erfolgt nach üblichen Methoden und mittels üblicher Maschinen.

Das erfindungsgemäße Verfahren für zu Wellpappenkarton mit verbesserter Festigkeit bei dessen Verwendung zur Herstellung von Verpackungsboxen. Bei gleicher Verwendung des Wellpappenkartons für Verpackungen, die eine bestimmte Grenzbelastung aushalten müssen, ist es möglich, erfindungsgemäße Wellpappenkartons mit verminderter Grammatur im Vergleich zur benötigten Grammatur herkömmlicher Wellpappenkartons zu verwenden. Weiterhin weist der erfindungsgemäße Wellpappenkarton bei gleicher Grammatur eine erhöhte Belastbarkeit der hiermit hergestellten Verpackungsboxen auf, als die Verpackungsboxen aus herkömmlichen Wellpappenkartons.

### Beispiele

Die nachfolgenden Beispiele sollen die vorliegende Erfindung näher erläutern. Die Prozentangaben in den Beispielen sind Gewichtsprozent, sofern nichts anderes angegeben ist.

Der K-Wert der Polymerisate wurde nach Fikentscher, Cellulose-Chemie, Band 13, 58-64 und 71-74 (1932) bei einer Temperatur von 20°C in 5 gew.-%igen wässrigen Kochsalzlösungen bei einem pH-Wert von 7 und einer Polymerkonzentration von 0,5% bestimmt. Dabei bedeutet K = k· 1000.

In den Beispielen und in den Vergleichsbeispielen wurden folgende Polymere verwendet.

### Polymer (A)

Teilhydrolysiertes Polyvinylformamid (Hydrolysegrad 30%) mit einem K-Wert von 90.

### Polymer (B)

Anionisches Polymer der Monomerzusammensetzung 70 Mol% Acrylamid und 30 Mol% Acrylsäure, das ein M_{w} von 800 000 g/mol aufweist und eine anionischen Ladungsdichte von - 3,8 meq/g besitzt.

### Stärkelösung Herstellung:

Verwendet wurde eine Maisstärke mit dem Handelsnamen Merizet® 120 (Firma Tate & Lyle), welche wie folgt enzymatisch abgebaut wurde. Eine 12 % Slurry von Merizet 120 wurde in 65 °C warmen Wasser unter Rührung in einem 1 000 L Gefäß hergestellt und 0,012 % Enzym 120 PL der Firma Novozyme hinzugegeben. Nach 20 Minuten wurden 100 ml Essigsäure in die Stärkelösung dosiert, um den Stärkeabbau zu terminieren. Die Stärkelösung hatte eine Viskosität von 55 mPas bei 100 RPM (Spindel 2).

### Weitere als Hilfsmittel eingesetzte Verbindungen:

Retentionsmittel: Polyvinylformamid (mit einem Hydrolysegrad von 20 %), einem K Wert von 160 und einer kationischen Ladungsdichte von 25 mmol / 100 g.

Basoplast® 450 P: 30 gew.-%ige Lösung eines anionischen Oberflächenleimungsmittel (Firma BASF SE)

### Vorbehandlung des Papierstoffes

Ein Papier aus 100 % Altpapier (Mischung der Sorten: 1.02, 1.04, 4.01) wurde mit Trinkwasser bei einer Stoffdichte von 4 % in einem Pulper stippenfrei aufgeschlagen und in einem Refiner auf einen Mahlgrad von 40 °SR gemahlen. Dieser Stoff wurde anschließend mit Trinkwasser auf eine Stoffdichte von 0,8 % verdünnt.

### Entwässerungsprüfung

In den Beispielen und Vergleichsbeispielen wurde jeweils 1 Liter des oben beschriebenen Papierstoffs verwendet und jeweils nacheinander mit den in der Tabelle jeweils angegebenen wasserlöslichen Polymeren unter Rühren versetzt und danach mit Hilfe eines Schopper-Riegler-Entwässerungsprüfers entwässert, wobei man die Zeit in Sekunden für eine Durchflussmenge (Filtrat) von 600 ml bestimmte. Die Konzentration des Polymers A und des Polymers B, die jeweils als Trockenverfestigungsmittel für Papier getestet wurden, betrug jeweils 1 %. Die Messergebnisse sind in der Tabelle angegeben.

### Rohpapierherstellung und Behandlung

In den Beispielen und Vergleichsbeispielen wurden dem oben beschriebenen Papierstoff unter Rühren die in der Tabelle 1 angegebenen Polymere nacheinander zugesetzt. Dabei sind die jeweils eingesetzten Mengen (Gew.-Teile) der Polymere (fest), bezogen auf 100 Gew.-Teile Altpapier (fest) angegeben.
Die Dosierung der Polymere (Vinylamineinheiten enthaltendes kationionisches Polymer, polymere anionische Verbindung, und Retentionsmittel) erfolgte dabei jeweils in Form einer 1 gew.-%igen wässrigen Lösung zum Papierstoff. Der pH-Wert des Papierstoffs wurde konstant auf pH 7 gehalten (mittels 5 %iger Schwefelsäure).
Nach der letzten Zugabe der Polymere zum Papierstoff wurde Rohpapiere mit 2 m Breite und 5000 m Länge und einem Flächengewicht von 133 g/m² auf einer Langsiebpapiermaschine der Firma Voith hergestellt. Das Rohpapier wurde mittels einer Leimpresse mit einer Formulierung bestehend aus einer Stärkelösung und Leimungsmittel mit unterschiedlichen Auftragsmengen von 2,5 bis 7 g/m² veredelt. Das veredelte Papier wurde anschliessend mit Kontakttrockenern auf eine Papierfeuchte von 5 % getrocknet.

Es wurden die nachfolgend in der Tabelle 1 zusammengefassten Testliner (TL - Decklage) und Wellenrohpapiere (FL - Fluting) hergestellt.
Der mit den Polymeren behandelte Papierstoff ergab in der Entwässerungsprüfung einen Shopper Riegler-Wert von SR 40.

### Anwendungstechnische Prüfung der Rohpapiere

Vor Prüfung des Papiers wurde dieses 24 h bei 50 % Luftfeuchtigkeit gelagert und folgende Festigkeitsuntersuchungen durchgeführt
- Berstdruck gemäß DIN ISO 2758 (bis zu 600 kPa) und DIN ISO 2759 (oberhalb 600 kPa)
- SCT gemäß DIN 54518 (Shortspan compression test)
- CMT gemäß DIN EN 23035 (Corona medium test)

**Tabelle 1: Spezifikation der Testliner bzw. Wellenrohpapiere**

| Beispiel | Polymer A Gew.-Teile (fest) | Polymer B Gew.-Teile (fest) | Retentionsmittel Gew.-Teile (fest) | Stärke (fest)/Papierstoff (fest) [kg/TON] | Leimungsmittel 0,15 Gew.-Teile | Flächengewicht [g/m²] | Stärke/Fläche [g/m²] |
|---|---|---|---|---|---|---|---|
| RP 1 - TL n.e. | - | - | 0,046 | 50 (5 Gew.-%) | Basoplast 450 P | 140 | 7 |
| RP 2 - FL n.e. | - | - | 0,046 | 50 (5 Gew.-%) | - | 140 | 7 |
| RP 3 - TL n.e. | - | - | 0,046 | 20 (2 Gew.-%) | Basoplast 450 P | 140 | 2,8 |
| RP 4 - FL n.e. | - | - | 0,046 | 20 (2 Gew.-%) | - | 140 | 2,8 |
| CM 1 - TL n.e. | 1,3 | - | 0,023 | 50 (5 Gew.-%) | Basoplast 450 P | 140 | 7 |
| CM 1 - FL n.e. | 1,3 | - | 0,023 | 50 (5 Gew.-%) | - | 140 | 7 |
| CM 2 - TL n.e. | 2,34 | 1,75 | 0,023 | 50 (5 Gew.-%) | Basoplast 450 P | 140 | 7 |
| CM 2 - FL n.e. | 2,34 | 1,75 | 0,023 | 50 (5 Gew.-%) | - | 140 | 7 |
| CM 3 -TL | 1,3 | - | 0,023 | 20 (2 Gew.-%) | Basoplast 450 P | 140 | 2,8 |
| CM 3 - FL | 1,3 | - | 0,023 | 20 (2 Gew.-%) | - | 140 | 2,8 |
| CM 4 -TL | 2,34 | 1,75 | 0,023 | 20 (2 Gew.-%) | Basoplast 450 P | 140 | 2,8 |
| CM 4 - FL | 2,34 | 1,75 | 0,023 | 20 (2 Gew.-%) | - | 140 | 2,8 |
| CM 5 - TL n.e. | 1,3 | - | 0,023 | - | Basoplast 450 P | 136 | - |
| CM 5 - FL n.e. | 1,3 | - | 0,023 | - | - | 136 | - |
| CM 6 - TL n.e. | 2,34 | 1,75 | 0,023 | - | Basoplast 450 P | 136 | - |
| CM 6 - FL n.e. | 2,34 | 1,75 | 0,023 | - | - | 136 | - |

| | | | | | | | |
|---|---|---|---|---|---|---|---|
| n.e. nicht erfindungsgemäß | | | | | | | |

### Wellpappenkartonherstellung

Die Wellenrohpapiere (Fluting - FL) wurden zu einer B Welle auf einer BHS Kartonmaschine hergestellt. Die Wellpappenkartonherstellung erfolgte unter Verwendung von Cargill 208 B 7 Leim, einer Geschwindigkeit von 125 m/min und einer Oberflächentemperatur der Decke 1 und Decke 2 von 63 °C. Das Auftragsgewicht des Leims betrug jeweils 2,5 g/m². Pro Versuch wurden jeweils 2500 m B Welle hergestellt. Der Wellpappenkarton besteht aus den beiden Deckschichten (Testliner A und Testliner B mit der dazwischenliegenden Welle.

Tabelle 2 ist die Zusammensetzung der Wellpappenkartons aus den oben beschriebenen Testlinern und Wellenrohpapieren zu entnehmen. Die Testliner wurden dabei zweimal unter gleichen Bedingungen hergestellt (Testliner -A und Testliner -B).

**Tabelle 2: Beispiele für Wellpappenkarton**

| Beispiel | Zusammensetzung Wellpappenkarton | | | Bemerkung¹⁾ |
|---|---|---|---|---|
| 1 n.e. | RP 1 TL - A | RP 2 FL | RP 1 TL - B | 5 Gew.-% Stärke |
| 2 n.e. | RP 3 TL - A | RP 4 FL | RP 3 TL - B | 2 Gew.-% Stärke |
| 3 n.e. | CM 1 - TL - A | CM 1 - FL | CM 1 - TL - B | Polymer A |
| | | | | 5 Gew.-% Stärke |
| 4 n.e. | CM 2- TL - A | CM 2 - FL | CM 2 - TL - B | Polymer A |
| | | | | Polymer B |
| | | | | 5 Gew.-% Stärke |
| 5 | CM 3 - TL - A | CM 3 - FL | CM 3 - TL - B | Polymer A |
| | | | | 2 Gew.-% Stärke |
| 6 | CM 4 - TL - A | CM 4 - FL | CM 4 - TL - B | Polymer A |
| | | | | Polymer B |
| | | | | 2 Gew.-% Stärke |
| 7 n.e. | CM 5 - TL - A | CM 5 - FL | CM 5 - TL - B | Polymer A |
| | | | | 0 % Stärke |
| 8 n.e. | CM 6 - TL - A | CM 6 - FL | CM 6 - TL - B | Polymer A |
| | | | | Polymer B |
| | | | | 0 % Stärke |

| | | | | |
|---|---|---|---|---|
| n.e.: nicht erfindungsgemäß ¹⁾ Die Stärkemenge bedeutet Stärke (fest) bezogen auf Papierstoff (fest) | | | | |

### Fefco Standard Box Herstellung

Der B Wellenpappenkarton wurde in einer inline Plotter- und Stanzmaschine der Firma Meier mit 30 m/min zu Fefco Standardboxen mit den Formaten 30 x 20 x 10 cm (Typ A), 40 x 30 x 20 cm (Typ B) und 50 x 40 x 30 cm (Typ C) hergestellt.

### Festigkeitsuntersuchungen der Standard Box aus Wellpappenkarton:

Die zu prüfenden Mustermaterialien wurden bei 23°C und 50% relativer Luftfeuchtigkeit bis zur Gewichtskonstanz (über mindestens 24h) konditioniert und danach erst geprüft. Die Probenvorbereitung erfolgte nach Norm. Die flachliegenden Wellpappschachteln wurden aufgerichtet und Boden- bzw. Deckellasche mit Klebeband verschlossen. Die anwendungstechnischen Messungen für ECT und FCT erfolgten an jeweils 10 Einzelproben (normkonform). Als Ergebnis wird der Mittelwert aus 10 Messungen angegeben.
- Kantenstauchwiderstand ECT nach DIN EN ISO 3037
- Flachstauchwiderstand FCT nach DIN EN ISO 3035

### An den Wellpappschachteln:

- Schachtelstauchwiderstand BCT nach DIN 55440. Der BCT wurde gemäß der DIN-Norm für die Schachteltypen A, B und C bestimmt-

Die Messungen des BCT erfolgten an jeweils 10 Schachteln normkonform. Als Ergebnis wird der Mittelwert aus 10 Messungen angegeben, sowie die dazugehörige Standardabweichung.

Tabelle 3 fasst die anwendungstechnischen Ergebnisse zu den behandelten Rohpapieren und den daraus hergestellten Wellenkarton zusammen. Dabei handelt es sich bei den behandelten Rohpapieren um die Werte vom Testliner.

**Tabelle 3**

| Beispiel Verfestigungs mittel und Stärkegehalt¹⁾ | SCT [kN*m²/g] | CMT [N*m²/g] | Burst [kPa*m²/g] | BCT - N Typ A | BCT - N Typ B | BCT - N Typ C | ECT [kN/m] | FCT [kPa] |
|---|---|---|---|---|---|---|---|---|
| Beispiel 1 n.e. 100 % Stärke | 1,85 | 1,69 | 2,29 | 2407 | 2398 | 2443 | 5,37 | 322 |
| Beispiel 2 n.e. 2 Gew.-% Stärke | 1,7 | 1,61 | 2,17 | 2128 | 2255 | 2399 | 4,87 | 326 |
| Bsp. 3 n.e. Polymer A 5 Gew.- % Stärke | 2 | 2,16 | 2,87 | 2707 | 2593 | 2669 | 6,06 | 448 |
| Beispiel 5 Polymer A, 2 Gew.-% Stärke | 1,82 | 2,05 | 2,53 | 2128 | 2405 | 2439 | 5,88 | 411 |
| Beispiel 7, n.e. Polymer A 0 % Stärke | 1,9 | 2 | 2,59 | 2027 | 2151 | 2282 | 4,95 | 394 |
| Beispiel 4 n.e. Polymer A, Polymer B 5 Gew.-% Stärke | 2,05 | 2,38 | 2,9 | 2563 | 2520 | 2611 | 6,36 | 424 |
| Beispiel 6 Polymer A, Polymer B, 2 Gew.-% Stärke | 1,86 | 2,12 | 2,7 | 2408 | 2377 | 2439 | 5,59 | 438 |
| Beispiel 8 n.e. Polymer A, Polymer B, 0 % Stärke | 1,9 | 2,2 | 2,82 | 2262 | 2532 | 2402 | 5,95 | 474 |

| | | | | | | | | |
|---|---|---|---|---|---|---|---|---|
| n.e.: nicht erfindungsgemäß ¹⁾ Die Stärkemenge bedeutet Stärke (fest) bezogen auf Papierstoff (fest)' | | | | | | | | |

Wie aus den Ergebnissen aus Tabelle 3 zu erkennen ist, ermöglicht der Einsatz von Polymer A in Kombination mit Polymer B (Beispiel 6) bzw. Polymer A (Beispiel 5) bei gleichzeitiger Reduktion der Stärkeauftragsmenge von 50 kg/Ton auf 20 kg/Ton vergleichbare Wellpappenfestigkeiten, wie bei Einsatz von Stärke als alleiniges Verfestigungsmittel.

## Patentansprüche

1. Verfahren zur Herstellung von Wellpappenkarton aus Papierlagen, die jeweils eine Grammatur von 70 bis 200 g/m² aufweisen, von denen mindestens eine Papierlage erhalten wird, durch ein Verfahren umfassend die Zugabe von
(A) 0,25 bis 5 Gew.-%, bezogen auf trockenen Papierstoff, mindestens eines Vinylamin-einheiten enthaltenden kationischen Polymers und
(B) 0 bis 5 Gew.-%, bezogen auf trockenen Papierstoff, mindestens einer polymeren anionischen Verbindung,
zu einem Papierstoff, Entwässern des Papierstoffes unter Blattbildung, Beschichten der erhaltenen Papierbahn mit
(C) 0,1 bis 3 Gew.-%, bezogen auf trockenen Papierstoff, mindestens einer Stärke
und Trocknen der beschichteten Papierbahn,
wobei die polymere anionische Verbindung ausgewählt ist unter einer polymeren anionischen Verbindung (B1) und einer polymeren anionischen Verbindung (B2),
wobei die polymere anionische Verbindung (B1) erhältlich ist durch Copolymerisieren einer Monomermischung, umfassend
(a) mindestens eines Monomers ausgewählt unter Acrylamid und eines N-Vinylcarbonsäureamids der Formel 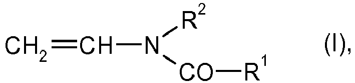 in der R¹, R² = H oder C₁- bis C₆-Alkyl bedeuten, und
(b) mindestens ein Säuregruppen enthaltendes monoethylenisch ungesättigtes Monomer und/oder dessen Alkalimetall-, Erdalkalimetall- oder Ammoniumsalzen und
(c) gegebenenfalls ein oder mehrere monoethylenisch ungesättigte Monomere, die von den Monomeren (a) und (b) verschieden sind, und
(d) gegebenenfalls eine oder mehrere Verbindungen, die mindestens zwei ethylenisch ungesättigte Doppelbindungen im Molekül aufweisen,
und die polymere anionische Verbindung (B2) das Hydrolyseprodukt der polymeren anionischen Verbindung (B1) ist, deren Carbonsäureamidreste teilweise oder vollständig zu Aminogruppen hydrolysiert wurden.

2. Verfahren nach Anspruch 1, **dadurch gekennzeichnet, dass** das Vinylamineinheiten enthaltende kationische Polymer erhältlich ist durch Polymerisieren von
(a) mindestens einem Monomer der Formel 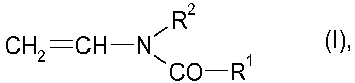 in der R¹, R² = H oder C₁- bis C₆-Alkyl bedeuten,
(c) gegebenenfalls einem oder mehreren monoethylenisch ungesättigten Monomeren, die von den Monomeren (a) verschieden sind, und
(d) gegebenenfalls einer oder mehrerer Verbindungen, die mindestens zwei ethylenisch ungesättigte Doppelbindungen im Molekül aufweisen,
und anschließender teilweiser oder vollständiger Hydrolyse der in das Polymer einpolymerisierten Einheiten der Monomere (I) unter Bildung von Aminogruppen
und/oder das Vinylamineinheiten enthaltende kationische Polymer erhältlich ist durch Hofmann-Abbau von Polymeren, die Acrylamid- und/oder Methacrylamideinheiten aufweisen.

3. Verfahren nach Anspruch 1 oder 2, **dadurch gekennzeichnet, dass** das Vinylamineinheiten enthaltende kationische Polymer Polyvinylamin oder ein zu mindestens 10 Mol-% hydrolysiertes Homopolymer des N-Vinylformamids ist.

4. Verfahren nach einem der Ansprüche 1 bis 3, **dadurch gekennzeichnet, dass** die polymere anionische Verbindung erhältlich ist durch Polymerisieren einer Monomermischung, umfassend
(a) mindestens ein Monomer ausgewählt unter Acrylamid und einem N-Vinylcarbonsäureamid der Formel 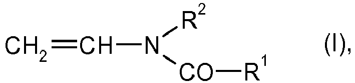 in der R¹, R² = H oder C₁- bis C₆-Alkyl bedeuten,
(b) mindestens ein Säuregruppen enthaltendes monoethylenisch ungesättigtes Monomer und/oder dessen Alkalimetall-, Erdalkalimetall- oder Ammoniumsalze und
(c) gegebenenfalls ein oder mehrere monoethylenisch ungesättigte Monomere, die von den Monomeren (a) und (b) verschieden sind, und
(d) gegebenenfalls eine oder mehrere Verbindungen, die mindestens zwei ethylenisch ungesättigte Doppelbindungen im Molekül aufweisen.

5. Verfahren nach einem der Ansprüche 1 bis 4, **dadurch gekennzeichnet, dass** die polymere anionische Verbindung erhältlich ist durch Polymerisieren einer Monomermischung, umfassend
(a1) N-Vinylformamid,
(b1) Acrylsäure, Methacrylsäure und/oder deren Alkali- oder Ammoniumsalzen und
(c1) gegebenenfalls ein oder mehrere monoethylenisch ungesättigte Monomere, die von den Monomeren der Gruppen (a) und (b) verschieden sind.

6. Verfahren nach einem der Ansprüche 1 bis 4, **dadurch gekennzeichnet, dass** die polymere anionische Verbindung ein anionisches Copolymer von Acrylamid ist.

7. Verfahren nach einem der Ansprüche 1 bis 4 oder 6, **dadurch gekennzeichnet, dass** die polymere anionische Verbindung erhältlich ist durch Copolymerisieren einer Monomermischung umfassend,
(a1) Acrylamid
(b1) Acrylsäure, Methacrylsäure und/oder deren Alkali- oder Ammoniumsalzen und
(c1) gegebenenfalls ein oder mehrere monoethylenisch ungesättigte Monomere, die von den Monomeren der Gruppen (a) und (b) verschieden sind.

8. Verfahren nach einem der Ansprüche 1 bis 7, **dadurch gekennzeichnet**, das die erhaltene Papierbahn mit einer enzymatisch abgebauten Stärke beschichtet wird.

9. Wellpappenkarton erhältlich nach einem Verfahren der Ansprüche 1 bis 8.

10. Verwendung des Wellpappenkartons gemäß Anspruch 9 zur Herstellung von Verpackungsboxen.

## Claims

1. A process for producing corrugated fiberboard from plies of paper which each have a grammage of 70 to 200 g/m² and of which at least one ply of paper is obtained by a process comprising the addition of
(A) 0.25 to 5 wt%, based on dry paper stock, of at least one cationic polymer comprising vinylamine units, and
(B) 0 to 5 wt%, based on dry paper stock, of at least one polymeric anionic compound,
to a paper stock, draining the paper stock by sheet formation, coating the paper web obtained with
(C) 0.1 to 3 wt%, based on dry paper stock, of at least one starch
and drying the coated paper web,
wherein the polymeric anionic compound is selected from a polymeric anionic compound (B1) and a polymeric anionic compound (B2),
wherein said polymeric anionic compound (B1) is obtainable by copolymerizing a monomer mixture comprising
(a) at least one monomer selected from acrylamide and an N-vinylcarboxamide of the formula
(b) 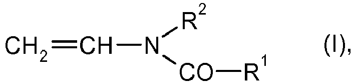 where R¹ and R² are each H or C₁ to C₆ alkyl, and
(c) at least one acid-functional monoethylenically unsaturated monomer and/or its alkali metal, alkaline earth metal or ammonium salts, and
(d) optionally one or more monoethylenically unsaturated compounds other than said monomers (a) and (b), and
(e) optionally one or more compounds having at least two ethylenically unsaturated double bonds in the molecule,
and said polymeric anionic compound (B2) is the hydrolysis product of said polymeric anionic compound (B1) whose carboxamide moieties have been partly or wholly hydrolyzed into amino groups.

2. The process according to claim 1 wherein the cationic polymer comprising vinylamine units is obtainable by polymerizing
(a) at least one monomer of the formula 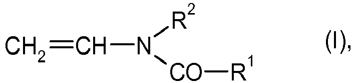 where R¹ and R² are each H or C₁ to C₆ alkyl,
(c) optionally one or more monoethylenically unsaturated monomers other than said monomers (a) and
(d) optionally one or more compounds having at least two ethylenically unsaturated double bonds in the molecule,
and then partially or completely hydrolyzing the monomer (I) units polymerized into the polymer, to form amino groups,
and/or the cationic polymer comprising vinylamine units is obtainable by Hofmann degradation of polymers having acrylamide and/or methacrylamide units.

3. The process according to claim 1 or 2 wherein the cationic polymer comprising vinylamine units is polyvinylamine or an at least 10 mol% hydrolyzed homopolymer of N-vinylformamide.

4. The process according to any of claims 1 to 3 wherein the polymeric anionic compound is obtainable by polymerizing a monomer mixture comprising
(a) at least one monomer selected from acrylamide and an N-vinylcarboxamide of the formula 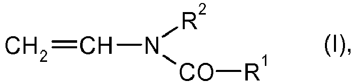 where R¹ and R² are each H or C₁ to C₆ alkyl, and
(b) at least one acid-functional monoethylenically unsaturated monomer and/or its alkali metal, alkaline earth metal or ammonium salts, and
(c) optionally one or more monoethylenically unsaturated monomers other than said monomers (a) and (b), and
(d) optionally one or more compounds having at least two ethylenically unsaturated double bonds in the molecule.

5. The process according to any of claims 1 to 4 wherein the polymeric anionic compound is obtainable by polymerizing a monomer mixture comprising
(a1) N-vinylformamide,
(b1) acrylic acid, methacrylic acid and/or alkali metal or ammonium salts thereof, and
(c1) optionally one or more monoethylenically unsaturated monomers other than the monomers of groups (a) and (b).

6. The process according to any of claims 1 to 4 wherein the polymeric anionic compound is an anionic copolymer of acrylamide.

7. The process according to any of claims 1 to 4 or 6 wherein the polymeric anionic compound is obtainable by copolymerizing a monomer mixture comprising
(a1) acrylamide
(b1) acrylic acid, methacrylic acid and/or alkali metal or ammonium salts thereof, and
(c1) optionally one or more monoethylenically unsaturated monomers other than the monomers of groups (a) and (b).

8. The process according to any of claims 1 to 7 wherein the paper web obtained is coated with an enzymatically degraded starch.

9. Corrugated fiberboard obtainable by a process of claims 1 to 8.

10. A method of using the corrugated fiberboard of claim 9 in the manufacture of packaging boxes.

## Revendications

1. Procédé de fabrication de carton ondulé à partir de couches de papier qui possèdent chacune un grammage de 70 à 200 g/m², parmi lesquelles au moins une couche de papier est obtenue par un procédé comprenant l'ajout de
(A) 0,25 à 5 % en poids, par rapport à la pâte à papier sèche, d'au moins un polymère cationique contenant des unités vinylamine et
(B) 0 à 5 % en poids, par rapport à la pâte à papier sèche, d'au moins un composé anionique polymère,
à une pâte à papier, la déshydratation de la pâte à papier avec formation d'une feuille, le revêtement de la bande de papier obtenue avec
(C) 0,1 à 3 % en poids, par rapport à la pâte à papier sèche, d'au moins un amidon,
et le séchage de la bande de papier revêtue,
le composé anionique polymère étant choisi parmi un composé anionique polymère (B1) et un composé anionique polymère (B2),
le composé anionique polymère (B1) pouvant être obtenu par la copolymérisation d'un mélange de monomères comprenant :
(a) au moins un monomère choisi parmi l'acrylamide et un amide d'acide N-vinylcarboxylique de formule 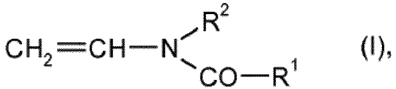 dans laquelle R¹, R² = H ou un alkyle en C₁ à C₆, et
(b) au moins un monomère monoéthyléniquement insaturé contenant des groupes acides et/ou ses sels de métaux alcalins, de métaux alcalino-terreux ou d'ammonium, et
(c) éventuellement un ou plusieurs monomères monoéthyléniquement insaturés, qui sont différents des monomères (a) et (b), et
(d) éventuellement un ou plusieurs composés qui comprennent au moins deux doubles liaisons éthyléniquement insaturées par molécule,
et le composé anionique polymère (B2) étant le produit de l'hydrolyse du composé anionique polymère (B1), dont les radicaux amide d'acide carboxylique ont été hydrolysés en partie ou en totalité pour former des groupes amino.

2. Procédé selon la revendication 1, **caractérisé en ce que** le polymère cationique contenant des unités vinylamine peut être obtenu par la polymérisation de
(a) au moins un monomère de formule 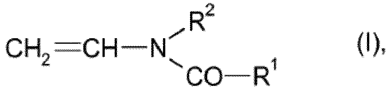 dans laquelle R¹, R² = H ou un alkyle en C₁ à C₆,
(c) éventuellement un ou plusieurs monomères éthyléniquement insaturés, qui sont différents des monomères (a), et
(d) éventuellement un ou plusieurs composés qui comprennent au moins deux doubles liaisons éthyléniquement insaturées par molécule,
puis l'hydrolyse partielle ou totale des unités des monomères (I) copolymérisées dans le polymère pour former des groupes amino,
et/ou le polymère cationique contenant des unités vinylamine peut être obtenu par décomposition de Hofmann de polymères qui comprennent des unités acrylamide et/ou méthacrylamide.

3. Procédé selon la revendication 1 ou 2, **caractérisé en ce que** le polymère cationique contenant des unités vinylamine est la polyvinylamine ou un homopolymère hydrolysé à hauteur d'au moins 10 % en moles de N-vinylformamide.

4. Procédé selon l'une quelconque des revendications 1 à 3, **caractérisé en ce que** le composé anionique polymère peut être obtenu par la polymérisation d'un mélange de monomères comprenant :
(a) au moins un monomère choisi parmi l'acrylamide et un amide d'acide N-vinylcarboxylique de formule 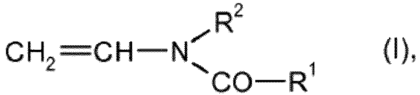 dans laquelle R¹, R² = H ou un alkyle en C₁ à C₆,
(b) au moins un monomère monoéthyléniquement insaturé contenant des groupes acides et/ou ses sels de métaux alcalins, de métaux alcalino-terreux ou d'ammonium, et
(c) éventuellement un ou plusieurs monomères monoéthyléniquement insaturés, qui sont différents des monomères (a) et (b), et
(d) éventuellement un ou plusieurs composés qui comprennent au moins deux doubles liaisons éthyléniquement insaturées par molécule.

5. Procédé selon l'une quelconque des revendications 1 à 4, **caractérisé en ce que** le composé anionique polymère peut être obtenu par la polymérisation d'un mélange de monomères, comprenant :
(a1) du N-vinylformamide,
(b1) de l'acide acrylique, de l'acide méthacrylique et/ou leurs sels alcalins ou d'ammonium, et
(c1) éventuellement un ou plusieurs monomères monoéthyléniquement insaturés, qui sont différents des monomères des groupes (a) et (b).

6. Procédé selon l'une quelconque des revendications 1 à 4, **caractérisé en ce que** le composé anionique polymère est un copolymère anionique d'acrylamide.

7. Procédé selon l'une quelconque des revendications 1 à 4 ou 6, **caractérisé en ce que** le composé anionique polymère peut être obtenu par la copolymérisation d'un mélange de monomères comprenant :
(a1) de l'acrylamide,
(b1) de l'acide acrylique, de l'acide méthacrylique et/ou leurs sels alcalins ou d'ammonium, et
(c1) éventuellement un ou plusieurs monomères monoéthyléniquement insaturés, qui sont différents des monomères des groupes (a) et (b).

8. Procédé selon l'une quelconque des revendications 1 à 7, **caractérisé en ce que** la bande de papier obtenue est revêtue avec un amidon décomposé enzymatiquement.

9. Carton ondulé pouvant être obtenu par un procédé selon les revendications 1 à 8.

10. Utilisation du carton ondulé selon la revendication 9 pour la fabrication de boîtes d'emballage.
